# EUROPEAN PATENT APPLICATION

(11) **EP 2 843 996 A1**
(43) Date of publication of application: **04.03.2015**
(21) Application number: 14182037.3
(22) Date of filing: 22.08.2014
(51) Int. Cl.: H04W 36/24

(54) **Method, system and device for determining whether to perform inter-frequency handover**

(30) Priority: 30.08.2013 ES 201331290
(71) Applicant: Vodafone IP Licensing Limited, The Connection Newbury Berkshire RG14 2FN (GB); Vodafone España, S.A.U., 28108 Alcobendas (ES)
(72) Inventor: De Pasquale, Andrea, London, W2 6BY (GB); Domínguez, Romero, Francisco Javier, London, W2 6BY (GB); Serrano, Solsona, Clara, London, W2 6BY (GB)
(74) Representative: Boult Wade Tennant

(57) **Abstract**

A method and system for determining whether to perform an inter-frequency handover (IFHO), comprising:
- getting information on the Application (102) for associating an application group (103) with data to be transmitted over the active data session,
- calculating (104) either a Remaining Time to Transmit (RemTT) or data size to transmit, depending on the associated application, for all the data remaining to be transmitted over the active data session,
- determining whether to perform an inter-frequency handover for the active data session or not, selecting the UEs which are targets for the IFHO (107, 110), based on the calculated remaining time or data size to transmit (106, 109) and based on whether the inter-frequency handover is scheduled to be initiated at call setup (105) or during the call (108).

## Description

### TECHNICAL FIELD OF THE INVENTION

The present invention has its application within the field of wireless telecommunications and, more particularly, relates to a method and network entities for the determination of criteria used in inter-frequency and inter-system handover in third generation (3G) and beyond 3G (Long Term Evolution: LTE) cellular networks.

### BACKGROUND OF THE INVENTION

The demand for mobile Internet increases every day and, in order to keep up with user preferences, nowadays mobile internet applications are provided by 3G networks, based on Universal Mobile Telecommunications System (UMTS) / High-Speed Packet Access (HSPA) technologies, and, improving third generation, Long Term Evolution (LTE) or LTE Advanced are also deployed. Examples of applications that are used by mobile users are video conferencing, email, messaging and live TV. For most of these applications, mobile users desire that their connections are maintained as their devices move from one access point to another. To provide this service, handover mechanisms are used between access points.

UMTS uses the Universal Terrestrial Radio Access Network (UTRAN) for handovers. The main component in UTRAN is the Radio Network Controller (RNC) which is connected to several base stations called Node B's.

LTE uses Evolved UMTS Terrestrial Radio Access network (EUTRAN) for handovers, which is the evolvement of UTRAN with a functional split between the radio access and core network in the network architecture. Due to this split all radio functionality is placed in the base station network entity, also called eNodeB (an evolved UTRAN Node B). Due to the use of eNodeB with RNC capabilities there is no need for a separate RNC.

Inter Frequency handovers (IFHO) are handovers between different frequencies in the same network. These handovers are used to provide a higher capacity on the cell. Within 3G networks, the RNC triggers the User Equipment (UE) to start measuring and identify cells and, based on the reported measurements, the RNC sends the command to connect to the cell with the lowest load or best signal. The UMTS standard based inter-frequency handover algorithm implements an inter-frequency handover as a hard handover between the different frequency bands [See 3GPP TS 25.331 Radio Resource Control (RRC), Protocol Specification (Release 6); 3GPP TR 25.931 UTRAN Functions]. In LTE, inter-frequency handovers are also possible, e.g. between LTE 2600 MHz and LTE 1800 MHz. And also another kind of inter-frequency handover is occurring between 3G and LTE, changing not only the frequency but also the Radio Access Technology (RAT), these are typically named Inter System Handover (ISHO).

In 3G and LTE there are several frequencies used currently. The spectrum typically used for 3G-UMTS is 2100 MHz in most countries and 900 MHz in countries that have allocated part of this band to GSM and part to UMTS. Every frequency in 3G has a fix of 5 MHz, so there can be up to 5 or 6 carriers used in 3G (e.g., 4 carriers in 2100 MHz - 20 MHz - and 2 carriers in 900 MHz - 10 MHz). Then, it is quite necessary to do inter-frequency load balancing.

The spectrums typically used in LTE Networks are the 2600 and 800 MHz (aka UHF) bands. In some LTE networks it is possible to use the 1800 MHz band which was used originally by the GSM system (known as DCS). In the case of LTE, every band is a single frequency because of the nature of the LTE OFDMA technology that allows having flexible frequency bandwidth (1.4, 3, 5, 10, 15, 20 MHz). Therefore, in Europe it is possible to have up to 3 frequencies in LTE, and again it is necessary to have a good and efficient inter-frequency handover. And moreover, LTE and 3G are used in the same areas, with the necessity of having good inter-RAT load balancing mechanisms.

Load balancing (or load sharing) algorithms are used to obtain the highest capacity of the system and maximise the use of the radio spectrum, which is one of the most expensive assets of the mobile network operators. Load balancing can be achieved steering the traffic to specific carrier at call set-up or during the call, in order to achieve a target efficient load distribution across several carriers in Packet Switching (PS) calls. As far as the traffic steering during the PS call is concerned, a typical solution is to analyse the load on an amount of carriers and order an IFHO to a number of UEs in order to bring the load of the source and target carriers to a specific value.

The typical load balancing algorithms can be classified in two groups:
- Load balancing at call setup: Basically this group refers to the fact that the handover to another frequency is executed at the beginning of the call. When a new call is setup in a given frequency, if the load of this frequency is higher than the rest of the frequencies, then the handover is executed. Inter-frequency load balancing at the set-up time is often based on the number of UEs in a specific carrier, and so overload management through this IFHO does not take into account the applications behind the Packet Switching (PS) sessions.
- Load balancing handover, during the call: This group refers to the fact that the load of a frequency is increasing and then it is needed to move one or more users to other less loaded frequencies. The typical criteria to choose a UE is the produced load, which can be due to Downlink Power of the Power Amplifier or due to Uplink Interference. Both measurements, Downlink Power and Uplink Interference, are instantaneous load produced at a given moment without taking into account the future potential load to be produced.

The current rise of smartphone utilization is making such load balancing strategies much less effective than they were in the past. Most of PS calls done through smartphones have a short duration and a limited number of packets downloaded. Therefore, the load effect created by handing over to another carrier used by a UE which is a smartphone simply disappears as soon as the PS session finalizes. Besides, moving an ongoing PS (data) session to another carrier has a cost in RNC / eNodeB processing because of the need to enter in compressed mode state and, in addition, sending messages from the RNC/NodeB/eNodeB to the UE for IFHO increases the signalling load of the radio interface.

There are existing systems that describes alternative load balancing approached for IFHO in 3G. For example, US 2013/100839 A1 discloses a system and method wherein, in response to a cell reselection notice, the network, e.g., E-UTRAN or UTRAN, is enabled to provide a wireless device (e.g., UE) with sufficient data to complete a pending data transfer, instead of performing the immediate cell change. Appropriate allocation of radio resources to the wireless device in the current serving cell and before cell change allows reduced packet data transfer latencies for small data sessions, better load balancing and traffic resourcing between cells, appropriate allocation of uplink resources in the new target cell, and enhanced control over network congestion. US 2013/100839 A1 is focused on solving the problem of transmitting the data stored in the buffer when a cell change is going to be done. Some data are sent in the first cell and then it is done the switching. But this is not solving the criteria to choose the user to be eligible in the load balancing handover. Moreover the 'sufficient data' to be transmitted is the data already in the buffer pending to be sent to the UE.

Another example of a mobile communications network which includes a load balancing entity is disclosed in WO 2013/045901. The mobile communications network includes a radio network part having one or more base stations for communicating data to or receiving data from mobile communications terminals (Ues). The radio network part is configured to provide a low bandwidth communications interface formed from a low bandwidth carrier for one or more of the UEs to communicate the data to or to receive the data from the mobile communications network in accordance with a relatively low bandwidth, and to provide a high bandwidth communications interface formed from a high bandwidth carrier for one or more of the UEs to communicate the data to or receive the data from the mobile communications network in accordance with a relatively high bandwidth. The load balancing entity in the mobile communications network is configured to monitor the data communicated by the one or more of the UEs to or from the low bandwidth interface and the data communicated by the one or more of the UEs to or from the high bandwidth interface, and consequent upon first predetermined conditions being satisfied to command one of the UEs which is attached for communication to the high bandwidth interface to detach from the high bandwidth interface and to re-attach to the low bandwidth interface for communicating the data to or receiving the data from the mobile communications network via the low bandwidth network. Accordingly communications resources of the mobile communications network which are allocated for the low bandwidth interface may be used more efficiently. The criteria to do this load balancing algorithms are: UEs entering in idle mode, or in Discontinuous Reception mode (DRX), or an inactivity period has happened to the UE, or the throughput is below a threshold. All of them based on the current activity of the terminals, but not forecasting the new data to be transmitted, so not efficient in the long term.

CN102868631 describes a load sharing method which comprises the following steps: extracting factor fields capable of distinguishing data flow in message headers of classified data flow, acting the factor fields as input factors of a default load sharing algorithm of a network forward equipment port, or acting the factor fields as flow characteristics according to each data flow, selecting input factors of load sharing algorithm capable of evenly distributing each data flow for the factor fields, calculating path of each data flow, and forwarding each data flow according to the paths. This load sharing method achieves expansibility increasing of network forward equipment and achieves load balancing. But this is a pure router IP approach based on IP-GTP and UDP headers, without entering in the type of traffic and the pending data to be transmitted, and nothing to do with the 3G and LTE relevant radio interface where the radio link conditions and available capacity makes more complex the load balancing algorithms.

Therefore, there is still a need for an improved management of data (packet switching) sessions in LTE and 3G to minimize signalling load, particularly with the aim of avoiding unnecessary inter-frequency handovers.

### SUMMARY OF THE INVENTION

The present invention serves to solve the aforesaid problem by providing an inter-frequency handover load balancing method and system, specifically for PS (i.e., data) sessions, based on an assessment of the size of the data session (in time and/or data quantity), by which the inter-frequency handover only occurs where the size is (or is likely to be) significant. This assessment can be based upon an estimated actual duration/data size or based upon identifying an application associated with the data session (e.g. certain apps may be known to be likely to download/upload large amounts of data, such as YouTube).

The present invention is applied for determining the inter-frequency handovers in PS sessions whose handover is expected to make a difference in the load of the current carrier, i.e. those PS sessions (e.g., Video Streaming or Radio streaming) which consume a relevant amount of resources and/or that are expected to last for a relevant amount of time after the handover takes place. On the contrary, PS sessions such as data sessions only involving Instant Messaging are discarded as proper application of the invention.

The present invention is applied for determining inter-frequency handovers as well as inter-system handovers, considering an inter-system handover as a special case of Inter-frequency handover, since Inter-frequency handover occurs while the UE moves among cells but the operating frequency changes and Inter-system handover also occurs when the UE moves among cells with two different operating frequency bands belonging respectively to two different radio access technologies.

The present invention is applicable to all 3G calls (UMTS, HSPA, HSPA+...) and 4G calls (LTE, LTE Advanced).

An aspect of the invention refers to a method for determining whether to perform an inter-frequency handover (including inter-frequency and inter-system handover) in a telecommunications network, wherein at least a data session of a user equipment (UE) engaged in a call is active and a need of initiating an inter-frequency handover is detected, which comprises the steps of:
- associating an application (or service) with data to be transmitted over the active data session,
- calculating either a remaining time or data size to transmit, depending on the associated application, for all the data remaining to be transmitted over the active data session,
- determining whether to perform an inter-frequency handover for the active data session or not, based on the calculated remaining time or data size to transmit and based on whether the inter-frequency handover is scheduled to be initiated at call setup or during the call.

In the context of the invention, data sessions are PS sessions and the possible States of data sessions are:
- inactive: no packet data transfer, no channel allocated.
- active (open): packet data transfer possible, channel allocated and data transferring is possible.

In a particular embodiment, the determination of whether or not to perform inter-frequency handover may be based upon the association of the application with the data session, because in the case that this application is known to typically transmit/receive substantial amounts of data during a data session (e.g. audio/video streaming apps), the remaining time to transmit/receive the data is calculated and the IFHO is performed while this time is not under a minimum.

In another possible embodiment, the determination of whether or not to perform inter-frequency handover may involve a previous estimation of the size of the remaining data to be transmitted/received to get an estimation of the remaining time to transmit/receive the data.

Another aspect of the invention deals with a (3G or beyond 3G) network entity for determining whether to perform an IFHO, e.g. either a RNC either Node-B in UMTS network or a e-NodeB in LTE network, which comprises processing means for performing the method described before. And another aspect of the invention deals with a system for determining whether to perform an IFHO in a (3G or beyond 3G) network which comprises at least one network entity performing the method described before.

A further aspect of the invention refers to a computer program product which comprises program code means to be loaded into processing means of a (3G or beyond 3G) network node in order to execute the described method.

The method and system in accordance with the above described aspects of the invention have a number of advantages with respect to prior art, summarized as follows:
- Regarding US 2013/100839, the present invention is calculating the remaining data to be transmitted based on a forecast done with historic data and packet inspection analysis instead of just the data to be transmitted in the buffer. This leads to a more efficient decision in terms of better load balancing and avoiding signalling load.
- Regarding WO 2013/045901, the present invention takes the decision of load balancing based on the remaining data to be transmitted/received instead of just based on the current activity of the terminal which is not efficient in the long term.
- Regarding CN 102868631, the present invention is focus on the 3G-LTE wireless networks load balancing algorithm which provides benefit of signalling load and more balanced load between frequencies, while the CN 102868631 is just a router load sharing algorithm based on IP headers.
- Furthermore, the present invention is a benefit to the mobile network operator in terms of more efficiency of the different frequencies and technologies used in the networks, providing more capacity with the same resources and avoiding unnecsarry signalling so less necessity of expanding hardware to process the signalling messages....

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a flow chart of the method for determining whether to perform an inter-frequency handover in 3G/4G telecommunications networks, according to a preferred embodiment of the invention.
Figure 2 shows a block diagram of the system architecture for determining whether to perform an inter-frequency handover in a 3G network, according to a possible embodiment of the invention.
Figure 3 shows a block diagram of the system architecture for determining whether to perform an inter-frequency handover in a LTE network, according to another possible embodiment of the invention.

### DETAILED DESCRIPTION OF THE INVENTION

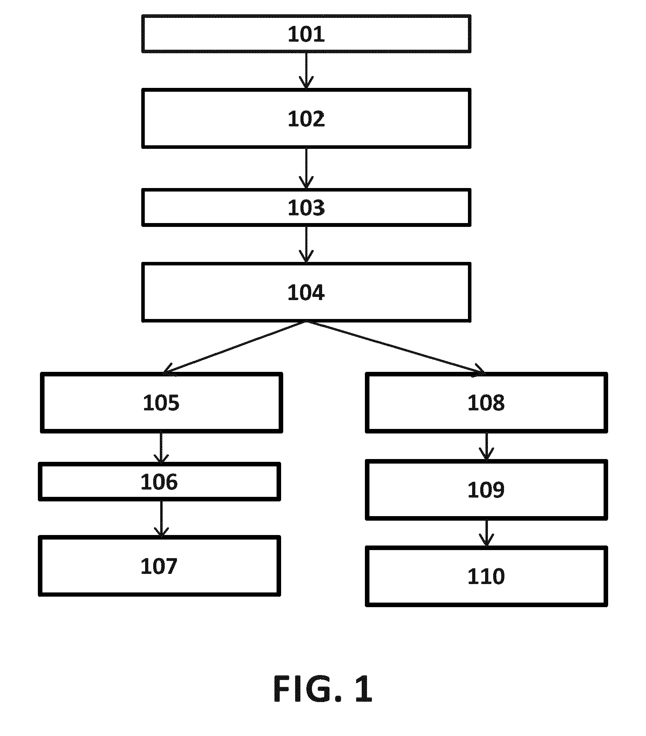

A preferred embodiment of the invention is focused on a method for determining whether to perform an inter-frequency handover or not in 3G and beyond 3G networks. Figure 1 shows a possible flow chart of the main steps which define the proposed method. Firstly, a necessity of initiating an inter-frequency handover (IFHO) is detected 101 by the 3G/4G system based on load measurements through the current algorithms. They are typically based on load measurements for example of Power consumption (as a percentage of the used power versus the total amount of power) or uplink interference. When the need of IFHO arises, this triggers the RNC/eNodeB, depending whether the system is 3G or 4G, to get information on the Application or service 102 which is sending and/or receiving data through the established PS Session. Based on the Application Awareness information retrieved, the RNC/eNodeB determines which Application Group the data exchanged through the established PS Session belong to. For this step, the RNC/eNodeB organizes the Applications 103 in the following Application Groups:
- Audio Streaming
- Content Download
   ∘ SW Applications
   ∘ Music
   ∘ Podcast
   ∘ Email attachments
   ∘ Other documents
   ∘ FTP
- Instant Messaging (WhatsApp, Facebook, Joyn, Lime,...)
- Web-browsing
- VoIP
- P2P
- Others

Then, the RNC/eNodeB computes or evaluates 104 the Remaining Time to Transmit (RemTT) for all the packets of the determined Application Group which are to be transmitted through the open PS session. Depending on the Application Group, the RemTT can be evaluated in different ways, described below. For each Application using the PS session, the RemTT is the expected remaining time before the data content belonging to the Application is fully downloaded.

Depending on the Inter-Frequency Load Balancing Algorithm used by the 3G/4G system, the inter-frequency handover can be scheduled to be executed either at the beginning of the call, i.e., Inter-Frequency Load Balancing at call setup 105, or during the call 108. Once the current algorithm of inter-frequency load balancing detects the necessity of making an IFHO to one or more users, the RNC/eNodeB selects the UEs which are targets for the Handover 107, 110, according to a set of criteria determined by the Inter-Frequency Load Balancing Algorithm 105, 108, currently used.

If the current algorithm of inter-frequency load balancing is Inter-frequency load balancing at call setup 105, the method introduces a new filter to decide if one PS session has to be transferred, i.e., handed over, to another frequency on top of the typical current algorithms. Therefore, once the current inter-frequency load balancing algorithm decides to perform the handover, this method performs a check on the remaining time to transmit RemTT, comparing 106 the evaluated RemTT with a threshold X, configurable by the mobile network operator. The threshold X can define a Minimum RemTT at call Set-Up, expressed in seconds, and hence, the PS session is maintained in the current frequency only if the evaluated RemTT is lower than this threshold X.

In the case that the Inter-frequency load balancing handover is to be executed during the call 108, the method provides criteria for selecting the UEs to be handed-over 109 as follows:
1) Selecting a group of Eligible UEs:
   The eligible UEs are those in which the RemTT is higher than a threshold defined as the Minimum RemTT in load balancing handover during the call. Thus, the rest of the UEs have a very low traffic and short time RemTT and, therefore, for those UEs which do not belong to the group of Eligible UEs the handover to another frequency would be useless because there is a risk of call drop and low load balancing effect with those (non-elegible) UEs.
2) Using UE Ranking criteria among the Eligible UEs to handover these UEs from a frequency to another one:
   2.1.) If Overload is due to Downlink:
      The DL traffic of each Eligible UE is evaluated and several criteria can be used to select one or more UEs:
         ■ Power Consumption: The selected UE is the one consuming more power than the other Eligible UEs. This criterion is very linked with the resource consumption and with the instantaneous throughput of the user. Optionally, this instantaneous throughput is another criterion to be used.
         ■ Remaining Time to Transmit (RemTT): The selected UE is the one with the highest RemTT, i.e., this UE is expected to be in transmission mode with DL load for more seconds than the other Eligible UEs. The value of the RemTT can be obtained by forecast and the longest 'time to transmit' UE would be the first one.
         ■ Energy forecast: This is a preferred criterion because it is the more efficient in terms of load balancing and long term resource consumption. The energy consumption forecast is the combination of the previous factors, since the Energy forecast is calculated as the current Power Consumption multiplied by the RemTT. This shows the forecast energy that is to be consumed by the user in the next RemTT seconds. The ranking of UEs selected for the handover is done in order of the highest forecast energy calculation.
   2.2.) If Overload is due to Uplink:
      The UL traffic of each Eligible UE is evaluated and, in addition, information on the produced Uplink interference is obtained for evaluation. In this case, any of the following criteria can be used to select one or more UEs:
         ■ Uplink interference: The UE producing the highest interference is selected. This criterion is very linked with the resource consumption and with the instantaneous throughput of the user in Uplink. Optionally this instantaneous throughput is another criterion to be used.
         ■ Remaining Time to Transmit (RemTT): The selected UE is the one with the highest RemTT in transmission mode with UL high load, i.e., the UE with the longest forecast RemTT is the first one to be selected.
         ■ Energy forecast. This is a preferred criterion because it is the more efficient in terms of load balancing and long term resource consumption. The energy forecast consumption forecast is the combination of the previous factors, since the Energy is calculated as the produced UL interference multiplied by the RemTT. The Eligibles UEs with the highest energy forecast consumption in transmission mode with UL high load are selected for the handover.
   2.3.) If Overload is due to both Downlink and Uplink:
      Any of the aforementioned and described criteria for Downlink or Uplink overload can be selected.

In Figure 1, the step 104 for the evaluation of the Remaining Time to Transmit (RemTT) can be implemented in different ways, which may depend on the Application Group of the data using the PS session. In general there are two types of calculations:
- Direct time evaluation: direct calculation based on the difference between the total time expected for the download/upload minus the time already consumed in the session.
- Evaluation through other parameters: RemTT = SRD/ETH, where
   ∘ SRD is the Size of the Remaining Data for the PS session, expressed in Mbits;
   ∘ ETH is the Expected Throughput in Mbps given to the UE in this PS session, which can be obtained as one of the following throughput values:
      - Average throughput given to this UE in the last p seconds of the current PS session.
      - Average "real time" throughput experimented by all the UEs in this cell.
      - Average throughput (statistically obtained by post-processing network statistics) experimented by all the

PS sessions belonging to the same Application Group. The specific calculation is different per Application Group:
- If the Application Group is Video or Audio Streaming, RemTT can be calculated as RemTT = Sec2-Sec1, where:
   ∘ Sec1: Time of video (or audio), in seconds, already downloaded to the UE.
   ∘ Sec2: Expected video (or audio) session duration in seconds. This factor can be evaluated, for example, by choosing either the average length of Video (or Audio) Streams downloaded by all the Elegible UEs in a certain region or the average length of video (audio) streams downloaded by a specific UE, identified through its IMEI, in the last Y days.
- If the Application Group is Content Download, there are two options to calculate the RemTT as SRD/ETH:
   ∘ Based on forecast statistics: For each subcategory, the average file size (AVS) is derived from the statistics of a certain region, and SRD = AVS - D, where D is the amount of data, in Mbits, already downloaded in the current PS session.
   ∘ By precise download calculation: through Deep Packet Inspection (DPI) at Application layer (Layer 7) to obtain the size and SRD of the file to be downloaded, if there is no encryption.
      - If the Application Group is Instant Messaging (IM), RemTT = Sec2-Sec1 where:
         ∘ Sec1: Time of IM session, in seconds, already elapsed since FACH/DCH state (in 3G systems) or Connected Mode (LTE systems) was started.
         ∘ Sec2: Expected IM session length. This factor can be evaluated by choosing either the average length of IM sessions of all users in a region or the average duration of IM sessions of a specific UE, identified through its IMEI, in the last Y days.
      - If the Application Group is Web-browsing, RemTT = SRD/ETH where: SRD = AVS - D, AVS is the average page size derived from the statistics of a region, and D is the amount of data, in Mbits, already downloaded in the current PS session.
      - If the Application Group is VoIP or P2P, RemTT = Sec2-Sec1 where:
         ∘ Sec1: Seconds of VoIP (or P2P) call elapsed
         ∘ Sec2: Expected VoIP (or P2P) call length. This factor is evaluated choosing either the average call length of all users in a region or the average duration of the VoIP (or P2P) call of a specific UE, identified through its IMEI, in the last Y days.
      - For any other Application Group, RemTT is evaluated as SRD/ETH, calculating the average page size (AVS) of the Application Group "Other" from the statistics of a region, and SRD = AVS - D, D denoting the amount of data already downloaded in the current PS session

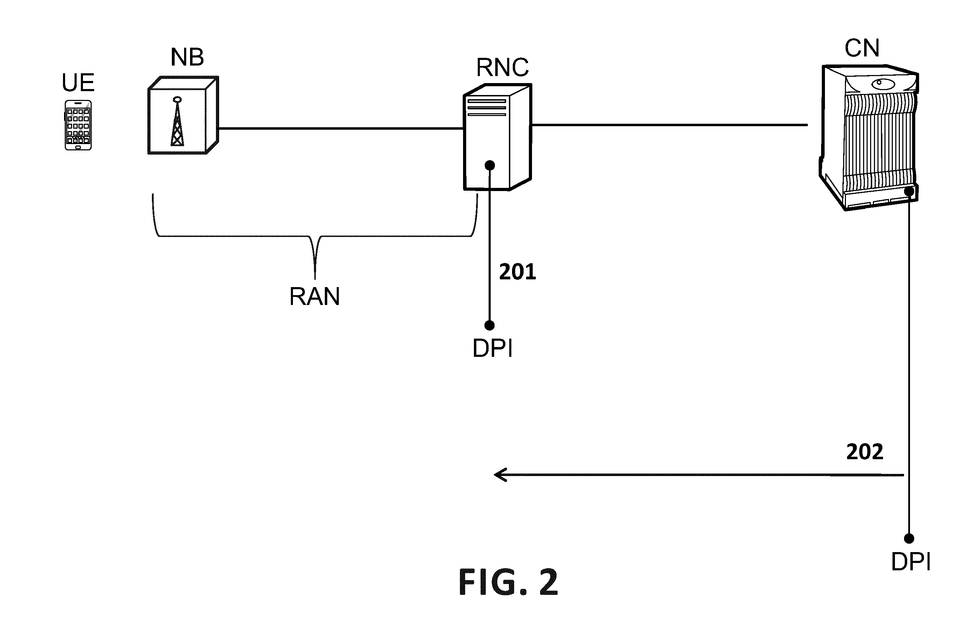

Figure 2 shows a possible architecture implementation of the system for determining whether to perform an inter-frequency handover in a wireless 3G network. Any user equipment (UE), which has a PS session open, may be employed to provide measurement reports so that the UMTS Radio Access Network (RAN) can receive real-time knowledge of the network conditions based on one or more parameters measured by the user equipments (UEs) in order to detect whether an IFHO is needed. The RAN includes one or more Radio Network Controllers (RNC) and one or more base stations called Nodes-B (NB) connected to a RNC. The RAN, in turn, connects to the Core Network (CN). In order to identify the service or application using the PS session there are two possible implementation options, shown in Figure 2:
- Using DPI or Deep Packet Inspection (201) in the Radio Access Network (RAN): A Node of the radio network can inspect the IP header of the application and then, once it is detected, the IP address configured for the specific service is obtained. If there are different service types coming from the same IP address, it is needed to enter also in the IP payload packet to detect properly the throughput required for the service. Inside the 3G radio network, this can be done either in the Node B or in the RNC:
- If DPI is done in the Radio Network Controller (RNC), the RNC itself triggers the Radio Bearer Reconfiguration and change the mobility and channel state internal parameters of the RNC.
- If DPI is done in the Node B (NB), it is necessary to send an indication of the service detection by a proprietary mechanism.
   Given the high processing power needed to implement the packet inspection feature and the superior RNC processing capacity compared with the NodeB; and taking into account the avoidance of the new message from the Node B to the RNC, the preferred solution is to implement DPI in the RNC.
- Using an Indication (202) from the Core Network (CN): The CN can detect whether some specific services are used, and then it can reconfigure some of the QoS parameters of the Radio Access Bearer, as specified in 3GPP TS 23.101, used as an indication of the services which are actually used.

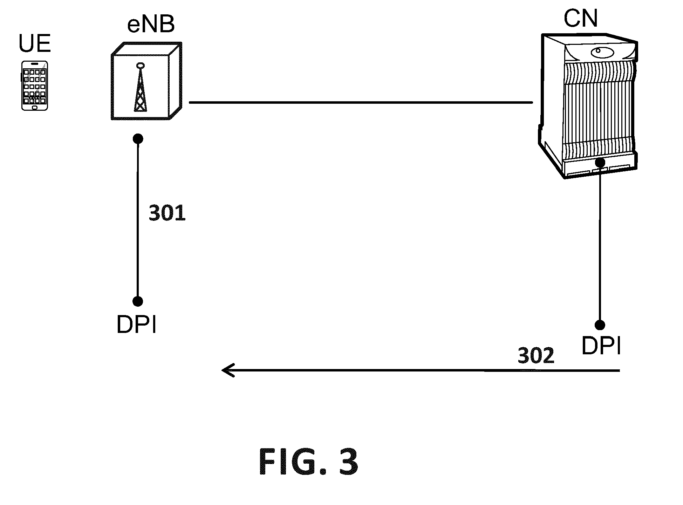

Figure 3 shows a possible architecture implementation of the system for determining whether to perform an inter-frequency handover in a wireless LTE network. LTE network architecture may include one or more user equipments (UE) connected to an Evolved UMTS Terrestrial Radio Access Network, E-UTRAN, and an Evolved Packet Core (EPC). The E-UTRAN includes only one type of network entity, which integrates base station and also radio network controller funcionalities in a single node, called eNodeB (eNB), providing user and control plane protocol terminations toward the user equipment (UE). In order to identify the service or application using the PS session there are two possible implementation options, shown in Figure 3:
- Using internal Deep Packet Inspection (301) in the E-UTRAN: In LTE, the only possible location of the DPI functionality inside the RAN is in the eNodeB (eNB).
- Using an Indication (302) from the Evolved Packet Core (EPC): see 3GPP TS 23.401.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for determining whether to perform an inter-frequency handover in a telecommunications network, wherein at least a data session of a user equipment (UE) engaged in a call is active and a need of initiating an inter-frequency handover is detected, the method **characterized by** comprising:
- associating an application with data to be transmitted over the active data session,
- calculating either a remaining time or data size to transmit, depending on the associated application, for all the data remaining to be transmitted over the active data session,
- determining whether to perform an inter-frequency handover for the active data session or not, based on the calculated remaining time or data size to transmit and based on whether the inter-frequency handover is scheduled to be initiated at call setup or during the call.

2. The method according to claim 1, wherein a remaining time to transmit (RemTT) is calculated for each application associated with data over the active data session as the expected remaining time before all the data associated with the application is fully downloaded in the user equipment (UE).

3. The method according to any preceding claim, wherein the remaining time to transmit (RemTT) is calculated as RemTT = Sec1 - Sec2, where Sec1 is time elapsed by the application using the data session and Sec2 is an expected duration of the use of the data session by the application.

4. The method according to either claim 1 or 2, wherein a remaining data size to transmit (SRD) is calculated for each application associated with data over the active data session and a remaining time to transmit (RemTT) is calculated as RemTT = SRD/ETH, where ETH is an expected throughput assigned to the user equipment (UE) in the data session.

5. The method according to any preceding claim, wherein the application is selected from Audio Streaming, Content Download, Sofware Application, Music, Podcast, Email attachments, documents, FTP, Instant Messaging,Web-browsing, VoIP and P2P.

6. The method according to any preceding claim, wherein associating the application with data to be transmitted over the active data session comprises obtaining an indication of the application from the radio access network (RAN) of the telecommunications network.

7. The method according to claim 6, wherein the indication of the application is obtained through deep packet inspection by a network entity selected from a Radio Network Controller (RNC), a Node B (NB) and an evolved NodeB (eNB).

8. The method according to any of claims 1-7, wherein associating the application with data to be transmitted over the active data session comprises obtaining an indication of the application from the core network (CN) of the telecommunications network.

9. A network entity for determining whether to perform an inter-frequency handover in a telecommunications network, comprising processing means for implementing the method according to any of claims 1-8.

10. The network entity according to claim 9, which is a Radio Network Controller (RNC).

11. The network entity according to claim 9, which is an evolved NodeB (eNB).

12. A system for determining whether to perform an inter-frequency handover in a telecommunications network, comprising a network entity defined in accordance to any of claims 9-11 and a user equipment (UE) connected with the network entity.

13. The system according to claim 12, wherein the telecommunications network is 3G.

14. The system according to claim 12, wherein the telecommunications network is LTE.

15. A computer program product comprising program code means which, when loaded into processing means of a network entity in a telecommunications network, make said program code means execute the method according to any of claims 1-8.
